# EUROPEAN PATENT APPLICATION

(11) **EP 4 379 980 A1**
(43) Date of publication of application: **05.06.2024**
(21) Application number: 22210897.9
(22) Date of filing: 01.12.2022
(51) Int. Cl.: H02B 1/20, H01R 4/30, H01R 13/03, H01R 25/14

(54) **A BUSBAR SYSTEM FOR A SWITCHGEAR**

(71) Applicant: ABB SCHWEIZ AG, 5400 Baden (CH)
(72) Inventor: CERNOHOUS, Josef, 561 65 Jamne nad Orlici (CZ); RUMLER, David, 664 51 Kobylnice (CZ); SKUCI, Michal, 602 00 Brno (CZ); BIHARY, Jozef, Graham, 27253 (US)
(74) Representative: Maiwald GmbH

(57) **Abstract**

The present invention relates to a busbar system for a switchgear, the busbar system comprising:
- a first bar;
- a second bar; and
- an insert;
wherein the first bar comprises a connection end;
wherein the second bar comprises a connection end;
wherein the insert comprises an electrically conductive material;
wherein the connection end of the first bar is connected to the connection end of the second bar, wherein the insert is between the connection end of the first bar and the connection end of the second bar.

## Description

### FIELD OF THE INVENTION

The present invention relates to busbar systems for a switchgear and to a switchgear.

### BACKGROUND OF THE INVENTION

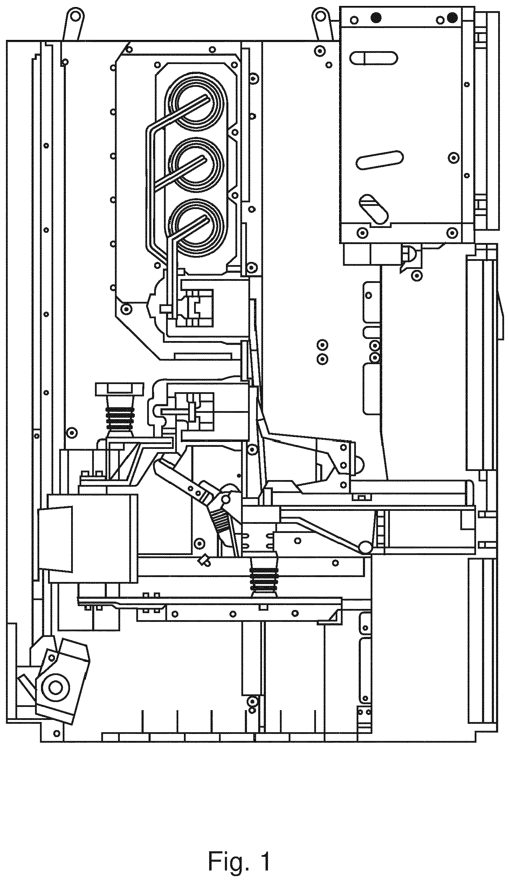

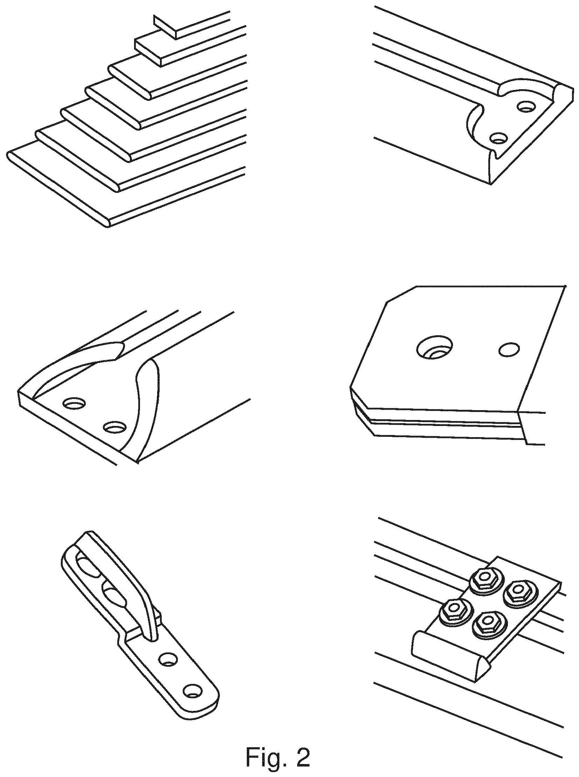

Switchgears, for example as shown in Fig. 1, use busbars (also called bars) to carry current. These busbars (bars) can be connected to each other and connected to current carrying parts of the switchgear. There are thousands of different types of busbar (bar), with examples of several shown in Fig. 2.

A low resistance at the connection point between busbars (bars) is required and a low resistance at the connection between the busbar (bar) and the current carrying part is required.

Presently in some case, the end of busbars (bars) is coated with a silver or nickel to decrease the connection resistance.

There is however a need to improve upon this technique of providing a low resistance connection for a busbar (bar).

### SUMMARY OF THE INVENTION

Therefore, it would be advantageous to have an improved technique of providing a low resistance connection for a busbar (bar).

The object of the present invention is solved with the subject matter of the independent claims, wherein further embodiments are incorporated in the dependent claims.

In a first aspect, there is provided a busbar system for a switchgear, the busbar system comprising:
- a first bar;
- a second bar; and
- an insert;

The first bar comprises a connection end. The second bar comprises a connection end. The insert comprises an electrically conductive material. The connection end of the first bar is connected to the connection end of the second bar. The insert is between the connection end of the first bar and the connection end of the second bar.

In this manner a busbar system for carrying current is provided for a switchgear or other high current carrying system, without the need to have individual busbars that have silver coated ends. The insert can be a thin copper plate that is silver coated or thin silver sheets, where the insert are used between the bare bars to provide a good current carrying ability. There is then no need to keep a large portfolio of partially silvered or completely silvered bars. Even though the amount of silver in the insert can be greater than the silver in the silver coating of existing bars, non-coated bars are significantly cheaper to supply and the additional cost of the insert means that a complete system of non-coated bars and insert is less expensive that the existing solution. The supply chain load is also reduced, ordering errors are reduced and supply is speeded up.

In an example, the insert is a silver sheet or plate.

A silver sheet or plate conforms very well to the two bars because of its softness, in effect deforming slightly and adjusting its position to provide for a reduction in contact resistance.

In an example, the insert is a silver plated copper sheet or plate.

A silver plated copper sheet or plate as well as providing a good contact between the two bars provides for an ability to withstand higher temperatures than a pure silver sheet or plate.

In an example, the insert has a thickness of 0.1mm, 0.2mm, 0.5mm, 1mm.

The insert can have other thicknesses, between these thicknesses or greater than 1mm or less than 0.1mm.

The insert, for example a thin silver insert or thin copper insert hat is silver coated will also deform as it is between the two bars as they are clamped together, which provides for greater integrity of the connection and a reduction in resistance and better current carrying capability and decreased risk of hot spots at the connection developing.

In an example, the connection end of the first bar has a connection hole. The connection end of the second bar has a connection hole. A bolt extends through the connection hole of the connection end of the first bar and the bolt extends into and/or through the connection hole of the connection end of the second bar.

Thus, the bars of the busbar system can be connected or clamped together and in doing so squeeze the insert between them to ensure a good electrical connection between the bars.

In an example, the insert has a connection hole, and the bolt extends through the connection hole of the insert.

In an example, a head of the bolt is located at an outer surface of the connection end of the first bar. A nut engages with the bolt at an outer surface of the connection end of the second bar.

In an example, the connection hole of the second bar is threaded and a head of the bolt is located at an outer surface of the connection end of the first bar and the bolt engages with the thread of the second bar.

In an example, the first bar is made of copper; and wherein the second bar is made of copper

In a second aspect, there is provided a busbar system for a switchgear, the busbar system comprising:
- at least one bar; and
- at least one insert.

A bar of the at least one bar comprises a connection end. The insert comprises an electrically conductive material. The connection end of the bar is connected to a current carrying part of a switchgear. An insert of the at least one insert is between the connection end of the bar and the current carrying part of the switchgear.

In an example, the insert is a silver sheet or plate.

In an example, the insert is a silver plated copper sheet or plate.

In an example, the insert has a thickness of 0.1mm, 0.2mm, 0.5mm, 1mm.

The insert can have other thicknesses, between these thicknesses or greater than 1mm or less than 0.1mm.

In an example, the connection end of the bar has a connection hole. The current carrying part of the switchgear has a connection hole. A bolt extends through the connection hole of the connection end of the bar and the bolt extends into and/or through the connection hole of the current carrying part of the switchgear.

In an example, the insert has a connection hole, and the bolt extends through the connection hole of the insert.

In an example, a head of the bolt is located at an outer surface of the connection end of the first bar and a nut engages with the bolt at an outer surface of the current carrying part of the switchgear.

In an example, the connection hole of the current carrying part of the switchgear is threaded and a head of the bolt is located at an outer surface of the connection end of the first bar and the bolt engages with the thread of the current carrying part of the switchgear.

In an example, the connection hole of the bar is threaded and a head of the bolt is located at an outer surface of the connection end of the current carrying part of the switchgear and the bolt engages with the thread of the bar.

In an example, the bar is made of copper.

The other bars of the at least one bar of the second aspect can be connected to each other as described with respect to the busbar system of the first aspect and its examples.

In an aspect, there is provided a low voltage, medium voltage or high voltage switchgear comprising at least one busbar system according to the first aspect.

In an aspect, there is provided a low voltage, medium voltage or high voltage switchgear comprising at least one busbar system according to the second aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a medium voltage switchgear;
Fig. 2 shows examples of busbars;
Fig. 3 shows on the left two examples of conventional ways of connecting busbars (bars), and on the right an example of the new technique of connecting busbars (bars); and
Fig. 4 shows an example of a number of busbars (bars) connected together using the new technique.

### DETAILED DESCRIPTION OF EMBODIMENTS

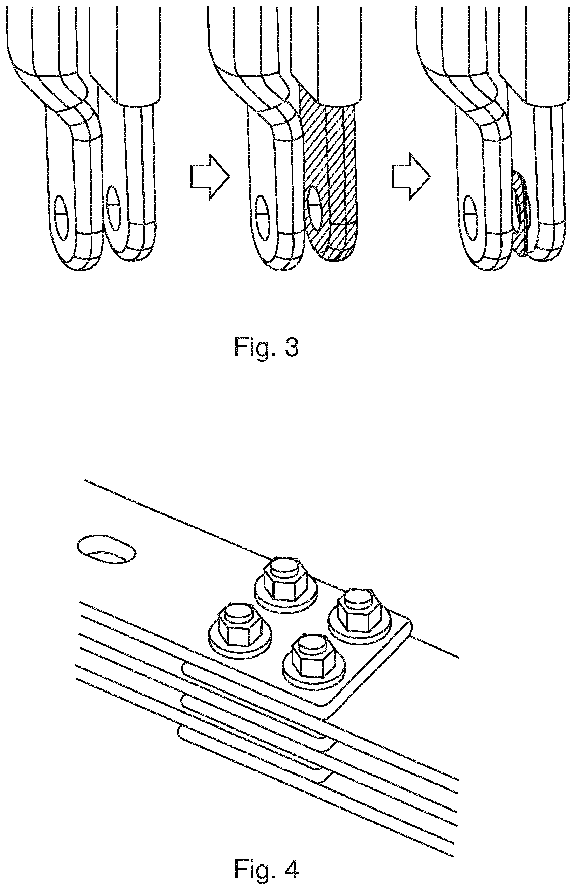

Figs. 3-4 relate to a new busbar system.

An example of a busbar system comprises a first bar, a second bar, and an insert. The first bar comprises a connection end. The second bar comprises a connection end. The insert comprises an electrically conductive material. The connection end of the first bar is connected to the connection end of the second bar. The insert is between the connection end of the first bar and the connection end of the second bar.

In this manner a busbar system for carrying current is provided for a switchgear or other high current carrying system, without the need to have individual busbars that have silver coated ends. The insert can be a thin copper plate that is silver coated or thin silver sheets, where the insert are used between the bare bars to provide a good current carrying ability. There is then no need to keep a large portfolio of partially silvered or completely silvered bars. Even though the amount of silver in the insert can be greater than the silver in the silver coating of existing bars, non-coated bars are significantly cheaper to supply and the additional cost of the insert means that a complete system of non-coated bars and insert is less expensive that the existing solution. The supply chain load is also reduced, ordering errors are reduced and supply is speeded up.

In an example, the insert is a silver sheet or plate.

A silver sheet or plate conforms very well to the two bars because of its softness, in effect deforming slightly and adjusting its position to provide for a reduction in contact resistance.

In an example, the insert is a silver plated copper sheet or plate.

A silver plated copper sheet or plate as well as providing a good contact between the two bars provides for an ability to withstand higher temperatures than a pure silver sheet or plate.

Depending upon the contact specification in terms voltage, and current and the temperature rise that could be anticipated in different situations, a silver insert or a silver coated or plated copper insert can eb used.

In an example, the insert has a thickness of 0.1mm, 0.2mm, 0.5mm, 1mm.

The insert can have other thicknesses, between these thicknesses or greater than 1mm or less than 0.1mm.

The insert, for example a thin silver insert or thin copper insert hat is silver coated will also deform as it is between the two bars as they are clamped together, which provides for greater integrity of the connection and a reduction in resistance and better current carrying capability and decreased risk of hot spots at the connection developing.

In an example, the connection end of the first bar has a connection hole. The connection end of the second bar has a connection hole. A bolt extends through the connection hole of the connection end of the first bar and the bolt extends into and/or through the connection hole of the connection end of the second bar.

Thus, the bars of the busbar system can be connected or clamped together and in doing so squeeze the insert between them to ensure a good electrical connection between the bars.

In an example, the insert has a connection hole, and the bolt extends through the connection hole of the insert.

In an example, a head of the bolt is located at an outer surface of the connection end of the first bar. A nut engages with the bolt at an outer surface of the connection end of the second bar.

In an example, the connection hole of the second bar is threaded and a head of the bolt is located at an outer surface of the connection end of the first bar and the bolt engages with the thread of the second bar.

In an example, the first bar is made of copper; and wherein the second bar is made of copper

An example of another busbar comprises at least one bar, and at least one insert. A bar of the at least one bar comprises a connection end. The insert comprises an electrically conductive material. The connection end of the bar is connected to a current carrying part of a switchgear. An insert of the at least one insert is between the connection end of the bar and the current carrying part of the switchgear.

In an example, the insert is a silver sheet or plate.

In an example, the insert is a silver plated copper sheet or plate.

In an example, the insert has a thickness of 0.1mm, 0.2mm, 0.5mm, 1mm.

The insert can have other thicknesses, between these thicknesses or greater than 1mm or less than 0.1mm.

In an example, the connection end of the bar has a connection hole. The current carrying part of the switchgear has a connection hole. A bolt extends through the connection hole of the connection end of the bar and the bolt extends into and/or through the connection hole of the current carrying part of the switchgear.

In an example, the insert has a connection hole, and the bolt extends through the connection hole of the insert.

In an example, a head of the bolt is located at an outer surface of the connection end of the first bar and a nut engages with the bolt at an outer surface of the current carrying part of the switchgear.

In an example, the connection hole of the current carrying part of the switchgear is threaded and a head of the bolt is located at an outer surface of the connection end of the first bar and the bolt engages with the thread of the current carrying part of the switchgear.

In an example, the connection hole of the bar is threaded and a head of the bolt is located at an outer surface of the connection end of the current carrying part of the switchgear and the bolt engages with the thread of the bar.

In an example, the bar is made of copper.

The other bars of the busbar system can be connected to each other using the other inserts in the equivalent manner to that described for the first busbar system.

It is clear that a low voltage, medium voltage or high voltage switchgear can have a one or more busbar system as described above, connecting busbars (bars) to current carry parts and/or connecting busbars (bars) to each other.

## Claims

1. A busbar system for a switchgear, the busbar system comprising:
- a first bar;
- a second bar; and
- an insert;
wherein the first bar comprises a connection end;
wherein the second bar comprises a connection end;
wherein the insert comprises an electrically conductive material;
wherein the connection end of the first bar is connected to the connection end of the second bar, wherein the insert is between the connection end of the first bar and the connection end of the second bar.

2. Busbar system according to claim 1, wherein the insert is a silver sheet or plate; or wherein the insert is a silver plated copper sheet or plate

3. Busbar system according to any of claims 1-2, wherein the insert has a thickness of 0.1mm, 0.2mm, 0.5mm, 1mm.

4. Busbar system according to any of claims 1-3, wherein the connection end of the first bar has a connection hole, wherein the connection end of the second bar has a connection hole, and wherein a bolt extends through the connection hole of the connection end of the first bar and the bolt extends into and/or through the connection hole of the connection end of the second bar.

5. Busbar system according to claim 4, wherein the insert has a connection hole, and wherein the bolt extends through the connection hole of the insert.

6. Busbar system according to any of claims 4-5, wherein a head of the bolt is located at an outer surface of the connection end of the first bar and wherein a nut engages with the bolt at an outer surface of the connection end of the second bar; or wherein the connection hole of the second bar is threaded and a head of the bolt is located at an outer surface of the connection end of the first bar and the bolt engages with the thread of the second bar.

7. Busbar system according to any of claims 1-6, wherein the first bar is made of copper; and wherein the second bar is made of copper

8. A busbar system for a switchgear, the busbar system comprising:
- at least one bar; and
- at least one insert;
wherein a bar of the at least one bar comprises a connection end;
wherein the insert comprises an electrically conductive material;
wherein the connection end of the bar is connected to a current carrying part of a switchgear, wherein an insert of the at least one insert is between the connection end of the bar and the current carrying part of the switchgear.

9. Busbar system according to claim 8, wherein the insert is a silver sheet or plate; or wherein the insert is a silver plated copper sheet or plate.

10. Busbar system according to any of claims 8-9, wherein the insert has a thickness of 0.1mm, 0.2mm, 0.5mm, 1mm.

11. Busbar system according to any of claims 8-10, wherein the connection end of the bar has a connection hole, wherein the current carrying part of the switchgear has a connection hole, and wherein a bolt extends through the connection hole of the connection end of the bar and the bolt extends into and/or through the connection hole of the current carrying part of the switchgear.

12. Busbar system according to claim 11, wherein the insert has a connection hole, and wherein the bolt extends through the connection hole of the insert.

13. Busbar system according to any of claims 11-12, wherein a head of the bolt is located at an outer surface of the connection end of the first bar and wherein a nut engages with the bolt at an outer surface of the current carrying part of the switchgear; or wherein the connection hole of the current carrying part of the switchgear is threaded and a head of the bolt is located at an outer surface of the connection end of the first bar and the bolt engages with the thread of the current carrying part of the switchgear; or wherein the connection hole of the bar is threaded and a head of the bolt is located at an outer surface of the connection end of the current carrying part of the switchgear and the bolt engages with the thread of the bar.

14. Busbar system according to any of claims 8-13, wherein the bar is made of copper.

15. A low voltage, medium voltage or high voltage switchgear comprising at least one busbar system according to any of claims 1-7 or at least one busbar system claims 7-14.
